Europäisches Patentamt

European Patent Office

Office européen des brevets

(11) Numéro de publication: **0 274 966 B1**

# FASCICULE DE BREVET EUROPEEN

(45) Date de publication de fascicule du brevet: **18.03.92**    (51) Int. Cl.5: **G01B 11/02**

(21) Numéro de dépôt: **87420330.0**

(22) Date de dépôt: **08.12.87**

Le dossier contient des informations techniques présentées postérieurement au dépôt de la demande et ne figurant pas dans le présent fascicule.

(54) **Procédé de détermination quantitative de forme de motifs en relief de très petites dimensions.**

(30) Priorité: **10.12.86 FR 8617611**

(43) Date de publication de la demande:
**20.07.88 Bulletin 88/29**

(45) Mention de la délivrance du brevet:
**18.03.92 Bulletin 92/12**

(84) Etats contractants désignés:
**BE CH DE FR GB IT LI NL**

(56) Documents cités:
**EP-A- 0 035 720**
**EP-A- 0 133 120**

**MICROELECTRONIC ENGINEERING, vol. 3, no. 1-4, décembre 1985, pages 211-218, Elsevier Science Publishers B.V., Amsterdam, NL; M.E. GUILLAUME et al.: "Evaluation of a fourier transform method for accurate critical dimension measurements"**

**ELECTRONICS, vol. 59, no. 8, 24 février 1986, pages 22,23, New York, US; R.T. GALLAGHER: "IC testing: A new way to measure submicron line widths"**

**SPIE vol 480, Integrated Circuit Metrology 2 (1984) p71-77;**

**L'écho des Recherches no 123 1/86, p57-64.**

(73) Titulaire: **Guillaume, Michel**
**Chemin du Pré de l'Achard**
**F-38330 Saint Nazaire Les Eymes(FR)**

(72) Inventeur: **Guillaume, Michel**
**Chemin du Pré de l'Achard**
**F-38330 Saint Nazaire Les Eymes(FR)**

(74) Mandataire: **de Beaumont, Michel**
**1bis, rue Champollion**
**F-38000 Grenoble(FR)**

## Description

La présente invention concerne un procédé optique de détermination de forme de motifs en relief de très petites dimensions, c'est-à-dire de dimensions de l'ordre du micromètre ou moins.

La présente invention trouve tout particulièrement des applications dans le domaine de l'industrie microélectronique. En effet, dans ce domaine, les techniques de fabrication telles que la photolithographie et la gravure progressent très rapidement et l'on arrive à des motifs de largeur inférieure à 1 micromètre. Ainsi, lorsqu'ils étudient un circuit intégré, les concepteurs définissent les tolérances acceptables pour la dimension des motifs qui servent à localiser les différentes fonctions. Les écarts de cote sont généralement dus à la fluctuation incontrôlée des grandeurs physiques qui interviennent au cours de la fabrication. Des contrôles sont prévus pour détecter les phases de fabrication qui posent des problèmes et procéder rapidement au réglage des machines responsables des défauts ainsi mis en évidence. Cependant, de tels contrôles ralentissent la production et en augmentent le coût et il convient d'éviter les décisions erronées qui conduisent au rejet de circuits corrects ou à l'acceptation de circuits défectueux. Le résultat des contrôles doit par conséquent être juste et fiable.

La plupart des systèmes de mesures dimensionnelles travaillent sur une image agrandie du motif à mesurer. Cette image est fournie par un microscope optique ou électronique auquel est associé un équipement spécialement conçu pour assurer la fonction de mesure.

Le microscope constitue le premier étage de la chaîne de mesure. Il est constitué d'un dispositif d'éclairage, d'une platine porte-objet et d'un dispositif de formation d'image.

L'éclairage est assuré à partir d'un source d'électrons dans le cas du microscope électronique à balayage (MEB) ou d'une source de lumière (lampe ou laser) en microscopie optique. Une fois éclairées, les différentes régions de l'objet réagissent soit en émettant des électrons secondaires (MEB) soit en réfléchissant une partie de la lumière reçue. L'interaction entre l'éclairage et l'objet dépend localement de la nature et de la disposition dans l'espace des matériaux en présence. Le phénomène résultant est à son tour modifié par le dispositif de formation d'image qui assure la collecte de l'information pour la mettre à la disposition du deuxième étage de mesure : le dispositif d'acquisition.

L'acquisition de l'information se fait par transformation du signal spatial optique (ou électronique) en un signal électrique qui peut être numérisé. Ce passage d'une information spatiale à une information temporelle est réalisé par balayage. Dans un MEB, l'objet et le détecteur sont fixes : c'est le faisceau d'éclairage qui se déplace par rapport à l'objet. En microscopie optique traditionelle, l'éclairage, l'objet et l'image sont fixes : c'est le dispositif de balayage du capteur qui génère le signal attendu.

La dimension que l'on se propose de déterminer est définie comme la distance qui sépare les deux bords mécaniques d'un trait. Initialement, la forme d'un motif est définie par son dessin sur le masque. Sa structure est essentiellement bidimensionnelle et dans une direction donnée.

Par contre, le motif réalisé sur une plaquette de circuit intégré nécessite une description en trois dimensions. Il est caractérisé par l'épaisseur des matériaux en présence et par la forme de ses bords. En particulier, si les bords ne sont pas verticaux, ce qui est couramment les cas, il est nécessaire de préciser le niveau auquel correspond la cote mesurée.

Grâce à son grand pouvoir de résolution, le MEB peut donner accès à cette topographie et peut fournir une mesure de référence. Malheureusement, l'opération est destructive. En effet, il faut cliver l'échantillon perpendiculairement à la direction du trait et observer la section du motif. De plus, afin d'éviter les phénomènes dus à l'accumulation des charges électriques dans le matériau, il faut métalliser l'object. Enfin, pour permettre l'étalonnage du grandissement du microscope, le motif doit appartenir à une structure périodique dont le pas se mesure facilement. Une telle procédure de mesure est très lourde. C'est néanmoins actuellement le seul procédé connu pour fournir des mesures précises d'objets de très petites dimensions. En effet, la limite de résolution des dispositifs de type MEB est de l'ordre de 0,5 à 50 nm alors qu'elle n'est que de 300 à 1000 nm pour les systèmes optiques.

Pour exploiter de façon plus efficace la résolution des systèmes à microscope optique, il a été décrit dans la demande de brevet français 83/12328 du 26 juillet 1983 un procédé particulier dans lequel, au lieu d'observer directement l'image d'un trait, on transforme cette image dans le domaine fréquentiel par transformation de Fourier discrète. Toutefois, ce procédé ne s'applique de façon fiable que quand l'épaisseur de l'objet à mesurer est inférieure à la profondeur de champ du microscope optique. En fait, on est limité à des mesures sur des couches d'une épaisseur de l'ordre de 0,8 micromètre.

Ainsi pour des structures de très petites dimensions, de largeur inférieure à un micron mais d'une hauteur de l'ordre du micron ou plus, par exemple un motif de largeur 0,8 $\mu m$ et de hauteur 1,2 $\mu m$, on ne dispose à l'heure actuelle d'aucun procédé de mesure de largeur de trait fiable et non destructif. D'autre part, quand on est en présence d'une telle structure qui ne présente a priori pas des bords verticaux, cela

EP 0 274 966 B1

ne signifie rien de donner seulement une mesure de dimension mais il faut en outre arriver à effectuer une détermination de forme.

Les équations régissant la formation de l'image d'un objet par microscope optique sont par exemple définies dans la thèse de Nicole Noailly présentée à l'Institut National Polytechnique de Grenoble au 1er Juillet 1985 et dans l'article de M.E. Guillaume paru dans l'Echo des Recherches N° 123, premier trimestre 1986, pages 57 à 64 qui se réfère à cette thèse.

C'est un objet de la présente invention que de prévoir un procédé de détermination de la forme d'un tel motif d'épaisseur non négligeable par rapport à sa largeur ainsi que par rapport à la profondeur de champ d'un système optique.

Il faut bien noter que, quand on fait une mesure de largeur de trait, on ne sait pas à quel endroit exactement par rapport à la hauteur ou épaisseur du motif s'effectue la mesure, parce qu'il n'est pas possible de déterminer exactement la position du plan focal par rapport à l'object. C'est aussi un objet de la présente invention que de lever cette ambiguïté.

Pour atteindre cet objet ainsi que d'autres, la présente invention prévoit un procédé de détermination quantitative d'une mesure de largeur d'un motif dans une couche formée sur un substrat consistant à acquérir à l'aide d'un microscope optique et à numériser une image i(x) de ce motif, la mise au point étant effectuée à une profondeur arbitraire par rapport à l'épaisseur du motif, et à calculer par transformation de Fourier le spectre fréquentiel I(X) correspondant à cette image. Ce procédé comprend en outre les étapes suivantes :
- calculer un modèle M(X) correspondant à un objet de largeur L, à la fonction de transfert du microscope optique, et à des paramètres a et b caractérisant le pouvoir réflecteur du motif par rapport au substrat selon la formule :

$$M(X) = b [T(X) \, \mathrm{sinc}\pi XL - a \, P(X) \cos\pi XL] \qquad (1)$$

où : $\mathrm{sinc}Y = (\sin Y)/Y$,
T(X) et P(X) sont des fonctions connues caractéristiques de la fonction de transfert du microscope en partant de valeurs a, b et L grossièrement estimées,
- calculer pour chaque valeur de X : D(X) = I(X)-M(X),
- calculer la sommation E de D(X) sur la plage des valeurs de X considérées dans la détermination du modèle,
- faire varier a, b et L pour rendre E minimal, et sélectionner la valeur de L correspondante,
d'où il résulte que l'on obtenu la valeur L correspondant à la profondeur arbitraire du motif sur laquelle la mise au point est effectuée. De préférence, les fonctions $\sin\pi XL$ et $\cos\pi XL$ constituent une base orthonormée du modèle.

Selon un mode de réalisation particulier de l'invention, la fonction transfert T(X) s'exprime sous la forme U(X,c) + d.V(X,e) et la fonction P(X) est déduite de T(X) par l'équation :

$$P(X) = (1/X) \int [T(X+X',X')/X']dX' \qquad (2)$$

dans laquelle :
- c, d et e sont des paramètres variables dont la valeur est déterminée de façon à minimiser l'écart entre l'observation et le modèle,
- X' est une variable d'intégration de même nature que la fréquence spatial X.

On obtient donc ainsi une première mesure de largeur d'un motif mais sans savoir à quelle cote en épaisseur correspond cette mesure.

Pour lever cette ambiguïté et déterminer de façon quantitative la forme du profil, on répéte la mesure au cours d'un balayage vertical pour des déplacements succesifs par incréments de l'objectif du microscope par rapport à l'objet mesuré, par exemple, en se dirigeant d'abord dans le sens de la profondeur puis en remontant ensuite en s'éloignant de l'objet.

Pour chacune de ces positions, le minimum de la valeur E susmentionnée est recherché pour fournir la valeur L correspondante. En outre, les minima parmi les minima de la valeur E indiquent les positions caractéristiques pour lesquelles la mesure est effectuée aux niveaux où l'objet mesuré présente des ruptures de pentes brutales (sommets, bases...).

Ces objets, caractéristiques et avantages de la présente invention apparaîtront plus clairement à la lumière de la description détaillée ci-après faite en relation avec les figures jointes parmi lesquelles :
la figure 1 représente un exemple de structure dont on veut déterminer la forme ;
la figure 2 représente l'image de la structure de la figure 1 sous la forme d'un profil d'intensité lumineuse

3

i(x) ;

la figure 3 illustre sous forme de courbe des étapes de mise en oeuvre de l'invention ; et

la figure 4 illustre l'évolution de la forme du spectre pour différentes mises au point.

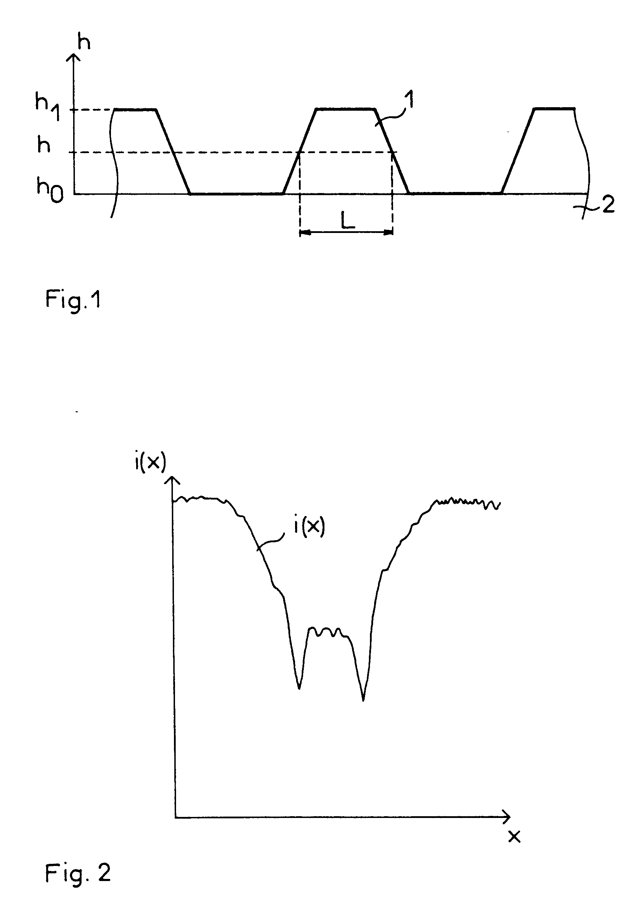

La figure 1 représente un exemple de motif dont on veut déterminer la forme selon l'invention. Il s'agira par exemple d'une nervure de résine 1 formée sur un substrat 2. Cette nervure est telle que sa hauteur est supérieure à la profondeur de champ du microscope utilisé.

Le dispositif de mesure comporte un microscope optique utilisé en mode fond clair fournissant une image agrandie du motif que l'on veut mesurer. Ce microscope est caractérisé par le fait que son éclairage est toujours partiellement cohérent du fait que la source lumineuse est quasi ponctuelle. En outre, la source lumineuse est caractérisée par un sceptre d'émission dont la largeur est suffisante pour faire disparaître les effets d'interférences parasites qui seraient observés avec un éclairage monochromatique. De préférence, la largeur de bande est voisine de 80 nm. De plus, la position centrale de la bande d'émission de cette source lumineuse peut être déplacée de façon à optimiser le contraste de l'image de l'objet. L'image ainsi obtenue est reçue sur un récepteur photosensible fournissant un signal proportionnel à l'intensité reçue. Le récepteur effectue un échantillonnage spatial de la répartition d'intensité de l'image. Cet échantillonnage respecte les conditions imposées par le théorème de Shannon, à savoir que si p est la limite de résolution du système optique, le pas d'échantillonnage est inférieur à p/2. Les échantillons sont ensuite numérisés et leur ensemble constitue le signal observé. Ce signal est traité par le procédé de transformation de Fourier décrit dans la demande de brevet français 8312328 du 26 juillet 1983. On notera que dans le cas d'un motif tel que celui représenté dont la hauteur (par exemple supérieure à un micron) est supérieure à la profondeur de champ du microscope utilisé, on ignore quelle est la valeur de la hauteur h à laquelle la mise au point est effectuée.

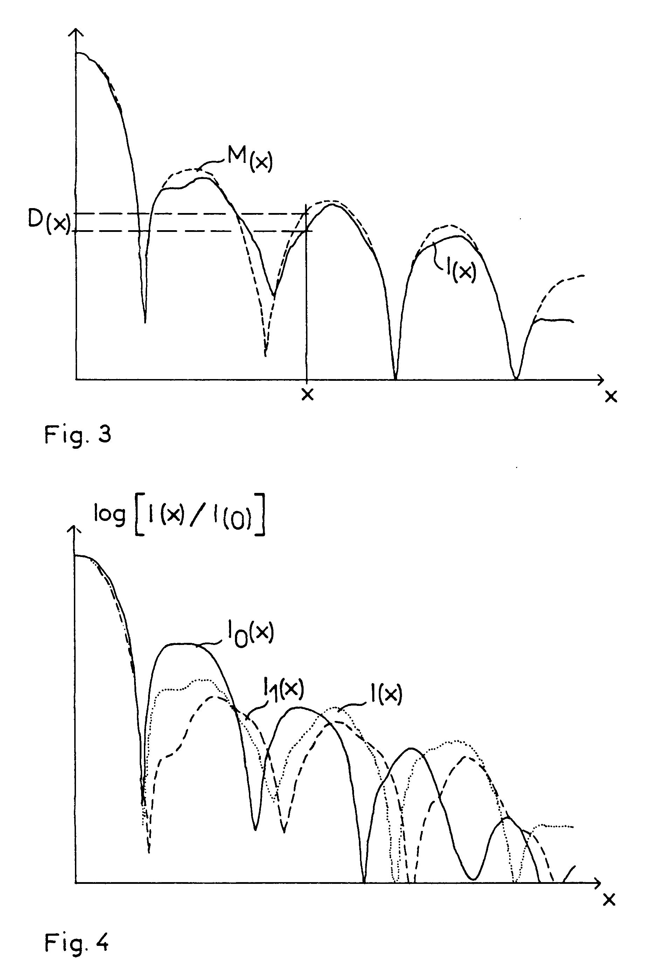

Ainsi, selon la présente invention, on fait l'acquisition de l'image i(x) pour une certaine mise au point du microscope (figure 2) et on calcule sa transformée de Fourier discrète qui correspond par exemple à la courbe I(X) représentée en traits pleins en figure 3. D'après le procédé classique décrit dans la demande de brevet susmentionnée, on peut éventuellement en déduire une première valeur approchée de la largeur pour la mise au point effectuée. On part ou bien de la valeur de largeur ainsi mesurée par le procédé classique ou bien d'une estimation a priori de la valeur de la largeur et l'on calcule, à partir de cette valeur estimée et de valeurs a priori des paramètres a, b, c, d et e, une fonction M(X) selon la formule (1) énoncée précédemment. Pour mémoire, on notera que b est un facteur de normalisation, a est un facteur dépendant des paramètres de réflexion respectifs du motif 1 et du substrat 2, T(X) et P(X) sont des fonctions connues caractéristiques de la fonction d'appareil du microscope optique. On calcule ensuite pour chaque valeur de X la valeur D(X) = I(X) - M(X) (voir figure 3) et l'on effectue la sommation E de D(X) sur la plage des valeurs de X considérée dans la détermination du modèle. Ensuite, on fait varier la valeur de L choisie arbitrairement comme point de départ de construction de la courbe M(X) ainsi que les valeurs a et b et l'on retient comme valeur de L la valeur qui amène à obtenir une sommation E minimale.

Par ce procédé, on a obtenu une valeur précise de la largeur L pour une hauteur h. Toutefois, ce résultat ne serait valable qui si le motif 1 était parfaitement rectangulaire du fait que l'on ne peut pas déterminer optiquement ou mécaniquement à quelle hauteur h le microscope a été mis au point par rapport au plan du substrat 2.

Selon l'invention, on s'est aperçu que, quand on déplace l'objectif du microscope par rapport à l'objet observé en se rapprochant du substrat 2, la valeur E obtenue après optimisation atteint un minimum minimorum quand h = 0. On peut ainsi déterminer le moment où le microscope est réglé pour une mise au point au niveau du substrat 2. Ensuite, en éloignant par incréments le microscope du substrat 2, et en calculant les valeurs L successives pour chaque incrément, on peut déterminer la forme du motif à analyser. On voit également un autre minimum apparaître quand on se trouve au sommet des motifs. Plus généralement, des minima nets apparaissent au niveau de chaque rupture de pente géométrique de l'objet mesuré.

Pour mieux faire comprendre la mise en oeuvre de l'invention la figure 3 représente, pour le cas du motif de la figure 1, des valeurs de la fonction $\log[I(x)/I(0)]$ et plus spécifiquement pour $I_0(x)$, $I(x)$ et $I_1(X)$ correspondant aux hauteurs h0, h et h1, respectivement.

Dans ce qui précède on a mentionné un éloignement et un rapprochement microscope/substrat dans le cas où le motif est en relief ; la méthode s'applique de même dans le cas où le motif est en creux, le minimum minimorum correspondant au niveau de l'interface entre le substrat et la couche portant le motif.

## Revendications

**1.** Procédé de détermination quantitative d'une mesure de largeur (L) d'un motif dans une couche formée sur un substrat consistant à acquérir à l'aide d'un microscope optique et à numériser une image i(x) de ce motif, la mise au point étant effectuée à une profondeur arbitraire par rapport à l'épaisseur du motif, et à calculer par transformation de Fourier le spectre fréquentiel I(X) correspondant à cette image, caractérisé en ce qu'il comprend en outre les étapes suivantes :

- calculer un modèle M(X) correspondant à un motif de largeur L et à la fonction de transfert du microscope selon la formule :

$$M(X) = b [T(X) \, \text{sinc}\pi XL - a \, P(X) \, \cos\pi XL]$$

où :

$$\text{sinc}Y = (\sin Y)/Y,$$

a et b sont des paramètres caractérisant le pouvoir réflecteur du motif par rapport au substrat,
T(X) et P(X) sont des fonctions connues caractéristiques de la fonction de transfert du microscope,
en partant de valeurs a, b et L grossièrement estimées,
- calculer pour chaque valeur de X : D(X) = I(X)-M(X),
- calculer la sommation E de D(X) sur la plage des valeurs de X considérées dans la détermination du modèle,
- faire varier a, b et L pour rendre E minimal, et sélectionner la valeur de L correspondante,
d'où il résulte que l'on a obtenu la valeur L correspondant à la profondeur arbitraire du motif sur laquelle la mise au point est effectuée.

2. Procédé de détermination quantitative d'une mesure de largeur (L) d'un motif sur un substrat selon la revendication 1, caractérisé en ce que le modèle M(X) est décomposé sur une base orthonormée en sin$\pi$XL et cos$\pi$XL.

3. Procédé de détermination quantitative d'une mesure de largeur (L) d'un motif sur un substrat selon l'une des revendications 1 ou 2, caractérisé en ce que la fonction transfert T(X) s'exprime sous la forme U(X,c) + d.V(X,e) et la fonction P(X) est déduite de T(X) par l'équation :

$$P(X) = (1/X) \int [T(X+X',X')/X']dX'$$

dans laquelle :
- c, d et e sont des paramètres variables dont la valeur est déterminée de façon à minimiser l'écart entre l'observation et le modèle,
- X' est une variable d'intégration de même nature que la fréquence spatiale X.

4. Procédé de détermination quantitative d'une mesure de largeur (L) d'un motif sur un substrat selon l'une quelconque des revendications 1 à 3, caractérisé en ce que le microscope optique com-prend une source lumineuse ayant un spectre d'émission dont la largeur est suffisante pour faire disparaître les effets d'interférences parasites qui seraient observés avec un éclairage monochromatique.

5. Procédé de détermination quantitative d'une mesure de largeur (L) d'un motif sur un substrat selon la revendication 4, caractérisé en ce que la position centrale de la bande d'émission de cette source lumineuse peut être déplacée de façon à optimiser le contraste de l'image du motif.

6. Procédé de détermination quantitative d'une mesure de largeur (L) d'un motif sur un substrat selon la revendication 1, caractérisé en ce qu'il comprend en outre les étapes consistant à :
faire varier la distance microscope-substrat,
pour chaque distance, mettre en oeuvre le procédé selon la revendication 1,
déterminer qu'on est à la zone d'affleurement substrat-motif quand la valeur de la sommation E atteint un minimum minimorum, et
éloigner ensuite par incréments le microscope de l'interface substrat/motif pour déterminer la valeur de L pour des distances successives et en déduire de façon quantitative le profil du motif.

**Claims**

1. A method for quantitatively determining the width of a pattern in a layer formed on a substrate consisting in acquiring by means of an optical microscope an image i(x) of said pattern and digitalizing same, the focussing being made at an arbitrary height with respect to the thickness of the pattern, and calculating through a Fourier transform the frequency spectrum I(X) corresponding to the image, characterized in that it further comprises the following steps:
   - calculating a model M(X) corresponding to a pattern having a width L and to the transfer function of the microscope according to the formula:

   $$M(X) = b [T(X) \, \mathrm{sinc}\pi XL - a \, P(X) \, \cos\pi XL]$$

   where
   . $\mathrm{sinc}Y = (\sin Y)/Y$,
   . a and b are parameters characterizing the reflecting power of the pattern with respect to the substrate,
   . T(X) and P(X) are known characterizing functions of the transfer function of the microscope,
   using initially roughly estimated a, b and L values,
   - calculating for each value of X : D(X) = I(X) - M(X),
   - calculating the summation E of D(X) on the range of the X values considered in the determination of the model,
   - varying a, b and L for having E minimum, and
   - selecting the corresponding L value,
   whereby the L value corresponding to the arbitrary height of the pattern onto which the focussing is made, is obtained.

2. A method for quantitatively determining the width of a pattern on a substrate according to claim 1, characterized in that the model M(X) is formed on an orthonormed base, $\sin\pi XL$ and $\cos\pi XL$.

3. A method for quantitatively determining the width of a pattern on a substrate according to claim 1 or 2, characterized in that the transfer function T(X) is of the type U(X, c) + d.V (X, e) and the function P(X) is deduced from the equation:

$$P(X) = \frac{1}{X} \int \frac{T(X + X', X')}{X'} \, dX'$$

where
   - c, d and e are variable parameters, the value of which is determined in order to minimize the variation between the observation and the model, and
   - X' is an integration variable of the same nature as the spatial frequency X.

4. A method for quantitatively determining the width of a pattern on a substrate according to any of claims 1 to 3, characterized in that the electronic microscope comprises a light source having an emission spectrum, the width of which is sufficient for having the parasitic interference effects, which would be obtained with a single wavelength lighting, to disappear.

5. A method for quantitatively determining the width of a pattern on a substrate according to claim 4, characterized in that the central position of the emissive band of the light source can be displaced in order to optimize the image contrast.

6. A method for quantitatively determining the width of a pattern on a substrate according to claim 1, characterized in that it further comprises the following steps:
   - varying the microscope-substrate distance,
   - for each distance, implementing the method according to claim 1,
   - determining the region where the substrate and the pattern are flush when the value of the

6

obtained summation E is a minimum minimorum, and

- incrementally moving the microscope apart from the interface substrate/pattern for determining the value L for successive distances and quantitatively deducing therefrom the pattern shape.

**Patentansprüche**

1. Verfahren zur quantitativen Ermittlung der Ausdehnung (L) eines Motives in einer auf einem Substrat aufgebrachten Schicht, wobei ein Bild i(x) des Motives mit Hilfe eines optischen Mikroskopes erhalten sowie das Bild digitalisiert wird und die Fokussierung mit einer willkürlich angenommenen Tiefenschärfe in Bezug zur Dicke des Motivs erfolgt, und wobei durch eine Fourier-Transformation das dem Bild entsprechende Frequenzspektrum I(X) berechnet wird, gekennzeichnet durch folgende zusätzliche Schritte:
   - Berechnen eines Modelles M(X) entsprechend eines Motives der Ausdehnung L und einer Übertragungsfunktion des Mikroskopes nach der Formel:

   $$M(X) = b [T(X) \operatorname{sinc}\pi XL - a P(X) \cos\pi XL]$$

   in der

   $$\operatorname{sinc}Y = (\sin Y)/Y$$

   a und b charakteristische Parameter für das Reflexionsvermögen des Motives in Bezug zum Substrat sind,
   T(X) und P(X) bekannte charakteristische Funktionen der Übertragungsfunktion des Mikroskopes sind,
   wobei zunächst grobgeschätzte Werte für a, b und L verwendet werden,
   - Berechnen von D(X) = I(X) - M(X) für jeden Wert von X,
   - Berechnen der Summe E von D(X) über den Bereich der Werte von X, die in der Modellermittlung berücksichtigt werden,
   - Variieren von a, b und L, um E minimal zu machen, sowie Auswählen des entsprechenden Wertes von L,
   wodurch der Wert für L erhalten wird, der der angenommenen Tiefenschärfe des Motivs entspricht, mit der die Fokussierung erreicht wird.

2. Verfahren zur quantitativen Ermittlung der Ausdehnung (L) eines Motives auf einen Substrat nach Anspruch 1, dadurch gekennzeichnet, daß das Modell M(X) über einer Basis zerlegt ist, die hinsichtlich $\sin\pi XL$ und $\cos\pi XL$ orthonormiert ist.

3. Verfahren zur quantitativen Ermittlung der Ausdehnung (L) eines Motives auf einem Substrat nach einem der Ansprüche 1 oder 2, dadurch gekennzeichnet, daß die Übertragungsfunktion T(X) in der Form U(X,c) + d.V(X,e) ausgedrückt und die Funktion P(X) von T(X) abgeleitet wird aus der Gleichung:

   $$P(X) = (1/X) \int[T(X + X', X')/X']dX'$$

   wobei
   - c, d und e variable Parameter sind, deren Wert bestimmt wird, um die Abweichung zwischen der Messung und dem Modell zu minimieren,
   - X' eine Integrationsvariable der gleichen Art wie die Ortsfrequenz X ist.

4. Verfahren zur quantitativen Ermittlung der Ausdehnung (L) eines Motives auf einem Substrat nach einem der Ansprüche 1 bis 3, dadurch gekennzeichnet, daß das optische Mikroskop eine Lichtquelle mit einem Emissionsspektrum aufweist, dessen Breite ausreicht, um die parasitären Interferenzeffekte zu eliminieren, die mit einer monochromatischen Beleuchtung beobachtet würden.

5. Verfahren zur quantitativen Ermittlung der Ausdehnung (L) eines Motives auf einem Substrat nach Anspruch 4, dadurch gekennzeichnet, daß die mittlere Lage der Emissionsbande der Lichtquelle verschoben werden kann, um den Kontrast des Bildes des Motivs zu optimieren.

**6.** Verfahren zur quantitativen Ermittlung der Ausdehnung (L) eines Motives auf einem Substrat nach Anspruch 1, gekennzeichnet durch folgende zusätzliche Schritte:
- Variieren des Abstandes Mikroskop/Substrat,
- Durchführen des Verfahrens nach Anspruch 1 für jeden Abstand,
- Bestimmen, daß Substrat und Motiv auf einer Höhe liegen, wenn der Wert der Summe E den geringsten Minimalwert erreicht und
- anschließendes inkrementelles Entfernen des Mikroskopes von der Grenzfläche Substrat/Motiv, um den Wert von L für sukzessive Abstände zu bestimmen und daraus quantitativ das Profil des Motives abzuleiten.

Fig.1

Fig. 2

Fig. 3

Fig. 4